(19) Europäisches Patentamt
European Patent Office
Office européen des brevets

(11) EP 2 899 613 A1

(12) **EUROPEAN PATENT APPLICATION**
published in accordance with Art. 153(4) EPC

(43) Date of publication:
**29.07.2015 Bulletin 2015/31**

(21) Application number: **14846954.7**

(22) Date of filing: **29.09.2014**

(51) Int Cl.:
***G06F 3/041*** *(2006.01)*

(86) International application number:
**PCT/KR2014/009120**

(87) International publication number:
**WO 2015/046996 (02.04.2015 Gazette 2015/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.09.2013 KR 20130116653**
**26.09.2014 KR 20140129370**

(71) Applicant: **LG Chem, Ltd.**
**Seoul 150-721 (KR)**

(72) Inventors:
- **MUN, Jeong Wook**
**Daejeon 305-738 (KR)**
- **KIM, Jung Woo**
**Daejeon 305-738 (KR)**
- **CHUN, Sung-Ho**
**Daejeon 305-738 (KR)**
- **CHOI, Dai Seung**
**Daejeon 305-738 (KR)**

(74) Representative: **Goddar, Heinz J.**
**Boehmert & Boehmert**
**Anwaltspartnerschaft mbB**
**Patentanwälte Rechtsanwälte**
**Pettenkoferstrasse 20-22**
**80336 München (DE)**

# (54) BASE FILM, AND LAMINATED STRUCTURE AND DISPLAY DEVICE COMPRISING SAME

(57) The present invention relates to a a base film, a laminated structure comprising the same, and a display device. More specifically, a transparent base film including a polymer having a cyclic olefin-based repeating unit including an exo isomer in a predetermined content or more to show a high glass transition temperature, such that thermal resistance may be excellent, and light transmittance may be high, and a laminated structure comprising the same, and a display device.

EP 2 899 613 A1

## Description

[TECHNICAL FIELD]

The present invention relates to a base film, a laminated structure comprising the same, and a display device, and more particularly, to a transparent base film showing a high glass transition temperature to have excellent thermal resistance and high light transmittance, a laminated structure comprising the same, and a display device.

The application claims the benefit of Korean Patent Application No. 10-2013-0116653 filed in the Korean Intellectual Property Office on September 30, 2013, and Korean Patent Application No. 10-2014-0129370 filed in the Korean Intellectual Property Office on September 26, 2014, the entire contents of which are incorporated herein by reference.

[BACKGROUND OF ART]

In general, a touch panel, which is an apparatus of being installed on a surface of a display device and converting physical contact such as a finger of user, a touch pen, or the like, into electrical signals to be output, has been applied to a liquid crystal display, a plasma display panel (PDP), an electro-luminescence (EL) device, or the like.

As the touch panel, an optical type using an infrared ray, a transparent electrode type using a contact of a transparent conductive film coated with a metal oxide on a polymer base film, a capacitance type detecting change in capacitance, a type of sensing a position of pressure of fingertip touching a panel from distribution of power to a pressure sensor disposed around the panel, and the like, which are classified by an operation principle, are commercialized.

Among various types of touch panel, the transparent electrode type needs a transparent metal oxide-based conductive film. An indium tin oxide (ITO) film in which indium tin oxide (ITO) is coated onto a polymer base film has been widely used due to transparency and excellent conductivity.

In particular, the metal oxide-based conductive film may be manufactured by a vacuum deposition process, a sputtering process, or the like, using a metal oxide on the polymer base film or a glass plate. Therefore, the polymer base film should be processed by the vacuum deposition process, the sputtering process, or the like, performed at a high temperature, such that thermal resistance is one of essential properties of the base film.

In general, thermal resistance may be evaluated by a glass transition temperature, and in order that an optically excellent and transparent metal oxide-based conductive film has the base film formed thereon, the sputtering process is required to be performed at about 150 °C or more, preferably, 200 °C or more, such that the base film needs to have a glass transition temperature higher than that of the sputtering process, and high mechanical physical properties.

In addition, in order that the base film is processed to be applied to a display device, and the like, transparency in a visible ray area is also an important property in addition to the above-described high glass transition temperature, such that light transmittance of 90% or more is required.

However, a polymer film such as polyethylene terephthalate (PET), polyethylene naphthalate (PEN), polycarbonate (PC), or the like, used as the base film in the related art shows a low glass transition temperature of 120 °C or less, such that problems that the polymer film is modified at the time of forming the transparent metal oxide-based conductive film may occur. In addition, a polyimide (PI) film which is largely researched in recent years due to excellent thermal resistance has an excellent glass transition temperature of 400 °C or more, but the film is not transparent and has an orange color, which is not appropriate for being used in display fields.

In addition, the polymer film such as polyethylene terephthalate (PET), or the like, is usable as an external base film due to a high phase difference; however, there is a limitation since it is not usable as an internal base film.

Accordingly, development of a transparent base film having properties such as a high glass transition temperature, thermal resistance, and the like, as well as low phase difference, a laminated structure comprising the same, and a display device comprising the laminated structure has been demanded.

[DETAILED DESCRIPTION OF THE INVENTION]

[Technical Problem]

The present invention has been made in an effort to provide a transparent base film showing a high glass transition temperature to have excellent thermal resistance and high light transmittance.

In addition, the present invention has been made in an effort to provide a laminated structure comprising the base film.

Further, the present invention has been made in an effort to provide a display device comprising the laminated structure.

[Technical Solution]

An exemplary embodiment of the present invention provides a base film including a polymer having a cyclic olefin-based repeating unit, wherein the cyclic olefin-based repeating unit has 50 mol% or more of an exo isomer, and a transparent metal oxide-based conductive film is formed on the base film.

In addition, another exemplary embodiment of the present invention provides a laminated structure comprising the base film, and a transparent metal oxide-based conductive film formed on the base film.

Further, another exemplary embodiment of the present invention provides a display device comprising the laminated structure.

Hereinafter, the base film, the laminated structure comprising the same, and the display device according to specifically exemplary embodiments of the present invention will be described in more detail.

According to an exemplary embodiment of the present invention, there is provided a base film including a polymer having a cyclic olefin-based repeating unit, wherein the cyclic olefin-based repeating unit has 50 mol% or more of an exo isomer, and a transparent metal oxide-based conductive film is formed on the base film.

The cyclic olefin-based repeating unit in the base film may be represented by the following Chemical Formula 1, and the polymer having the cyclic olefin-based repeating unit may include a homopolymer prepared by addition-polymerizing a norbornene-based monomer represented by the following Chemical Formula 2 alone, or a copolymer prepared by addition-copolymerizing two kinds or more thereof:

[Chemical Formula 1]

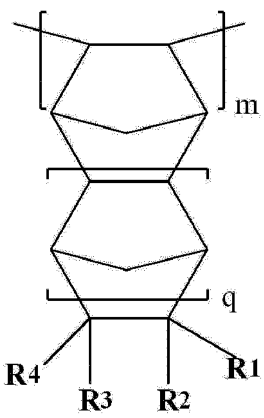

[Chemical Formula 2]

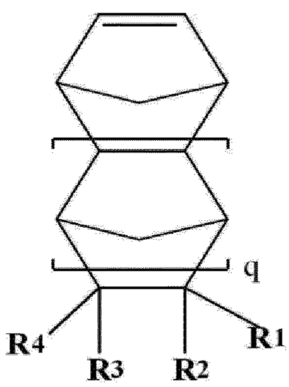

in Chemical Formulas 1 and 2,
q is an integer of 0 to 4;
m is 50 to 5000,
R1 to R4 are each independently a polar functional group or a non-polar functional group, or

at least one combination selected from the group consisting of R1 and R2, and R3 and R4 may be linked to each other to form a C1-C10 alkylidene group, or R1 or R2 may be linked to either of R3 and R4 to form a C4-C12 saturated or unsaturated aliphatic ring, or a C6-C24 aromatic ring.

The present inventors researched the base film having properties such as high glass transition temperature, thermal resistance, transparency, and the like, and being applicable to a display field, and particularly, the base film having the transparent metal oxide-based conductive film formed thereon, and confirmed by experiments that when the base film includes the polymer having the cyclic olefin-based repeating unit, and the cyclic olefin-based repeating unit has 50 mol% or more of an exo isomer, a glass transition temperature may be high, and light transmittance at a visible ray area may be high, thereby completing the present invention.

In particular, the base film may include the polymer having the cyclic olefin-based repeating unit, for example, the norbornene-based repeating unit to show a high glass transition temperature, and the cyclic olefin-based repeating unit may have 50 mol% or more of an exo isomer to show high light transmittance and transparency.

In the base film according to an exemplary embodiment of the present invention, the cyclic olefin-based repeating unit may have 50 mol% or more of an exo isomer, or 50 to 100 mol%. At the time of polymerizing the exo isomer in the cyclic olefin-based repeating unit, molecular weight and yield may be increased, and after reaction, it is easy to remove the catalyst, and particularly, remaining catalyst may be little, thermal resistance may be excellent, and solubility to the solvent may be high, such that the base film including the exo isomer in a large amount as compared to an endo isomer may show high thermal resistance and high transparency.

More specifically, in Chemical Formulas 1 and 2, the non-polar functional group substitutable in R1 to R4, and the like, may be selected from the group consisting of hydrogen; halogen; substituted or unsubstituted C1-C20 linear or branched alkyl; substituted or unsubstituted C2-C20 linear or branched alkenyl; substituted or unsubstituted C2-C20 linear or branched alkynyl; substituted or unsubstituted C3-C12 cycloalkyl; C6-C40 aryl; and substituted or unsubstituted C7-C15 aralkyl.

In addition, the polar functional group substitutable in R1 to R4, and the like may include at least one element selected from the group consisting of oxygen, nitrogen, phosphorus, sulfur, silicon, and boron, specifically, may be selected from the group consisting of functional groups as listed below:

- $R_5OR_6$, $-OR_6$, $-OC(O)OR_6$, $-R_5OC(O)OR_6$, $-C(O)OR_6$, $-R_5C(O)OR_6$, $-C(O)R_6$,$-R_5C(O)R_6$, $-OC(O)R_6$, $-R_5OC(O)R_6$, $-(R_5O)_p-OR_6$, $-(OR_5)_p-OR_6$, $-C(O)-O-C(O)R_6$,$-R_sC(O)-O-C(O)R_6$, $-SR_6$, $-R_5SR_6$, $-SSR_6$, $-R_5SSR_6$, $-S(=O)R_6$, $-R_5S(=O)R_6$,$-R_5C(=S)R_6$-, $-R_5C(=S)SR_6$, $-R_5SO_3R_6$, $-SO_3R_6$, $-R_5N=C=S$, $-N=C=S$, $-NCO$, $-R_5-NCO$,$-CN$, $-R_5CN$, $-NNC(=S)R_6$, $-R_5NNC(=S)R_6$, $-NO_2$, $-R_5NO_2$,

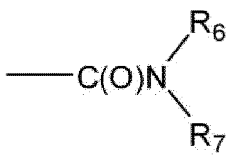 , 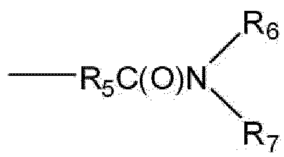 , 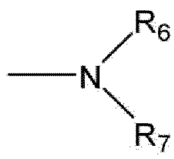 , 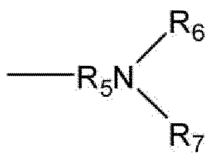 ,

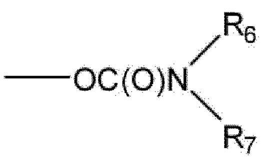 , 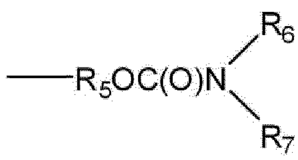 , 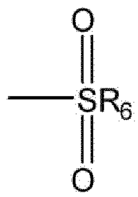 , 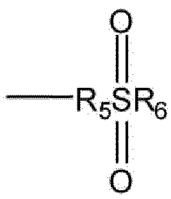 , 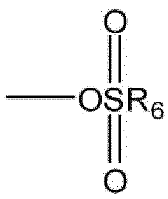 ,

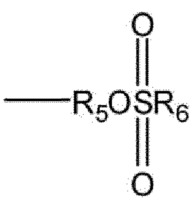 , 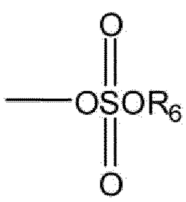 , 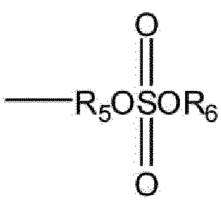 , 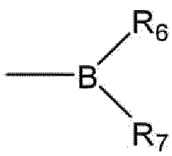 , 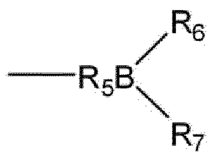 ,

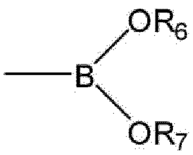, 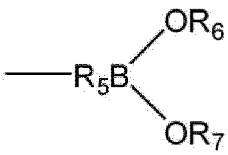, 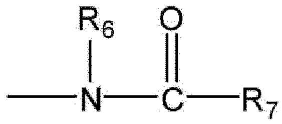, 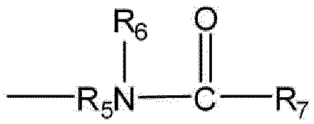,

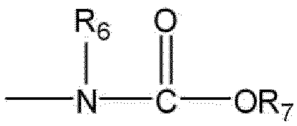, 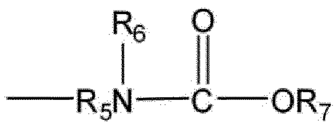, 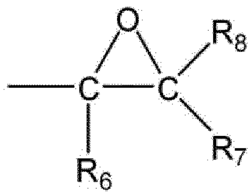,

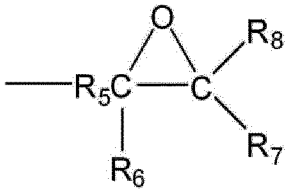, 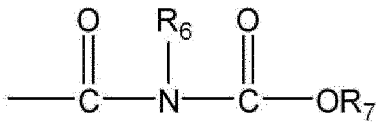, 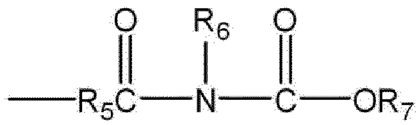,

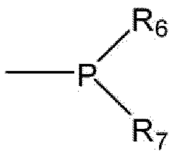, 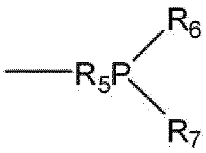, 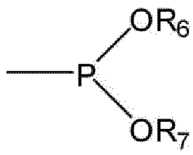, 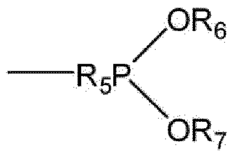, 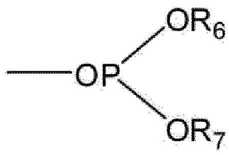,

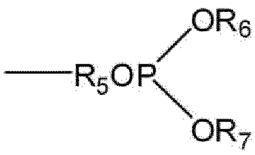, 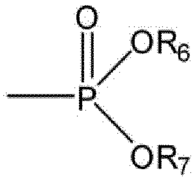, 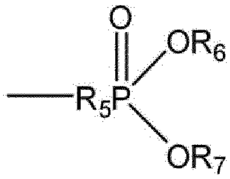, 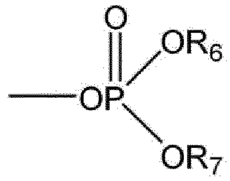,

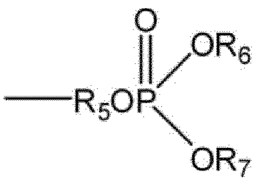, 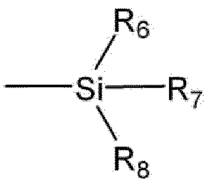, 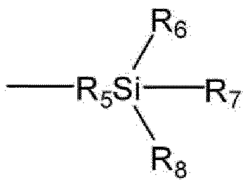, 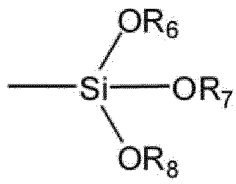,

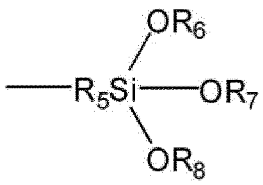, 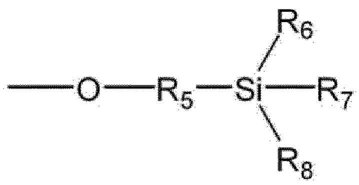, 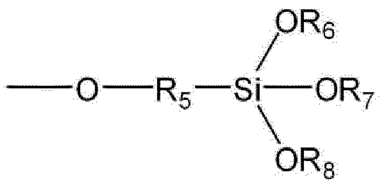,

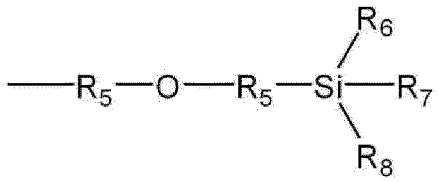
,
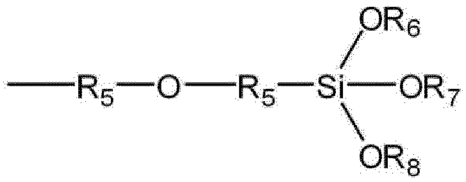
,
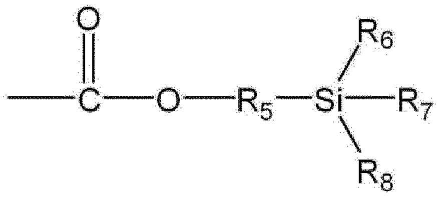
,
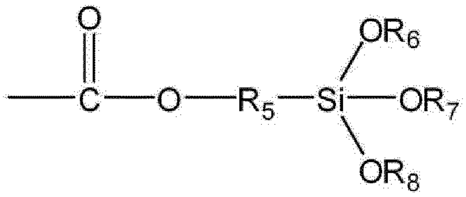
,
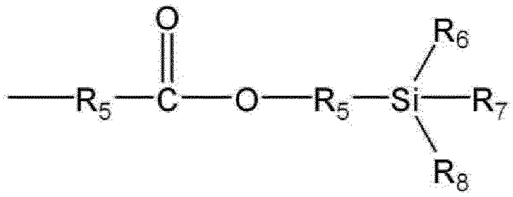
,
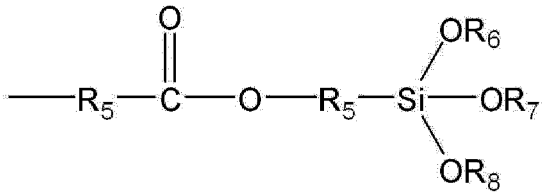
,
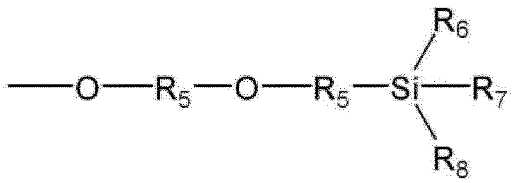
,
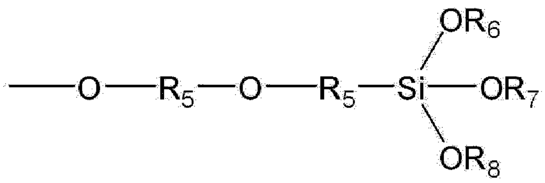
,
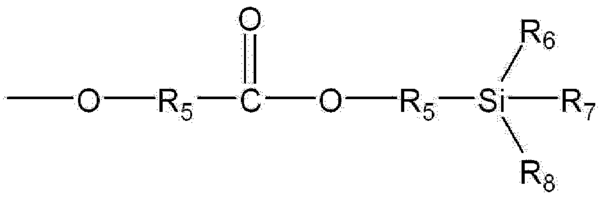
,
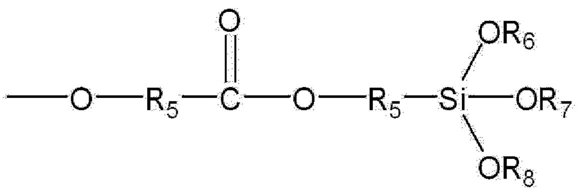
,
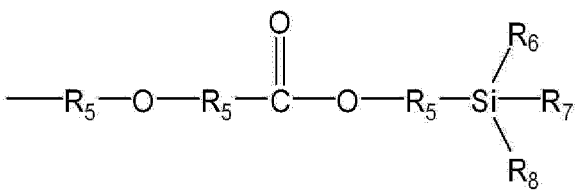
,

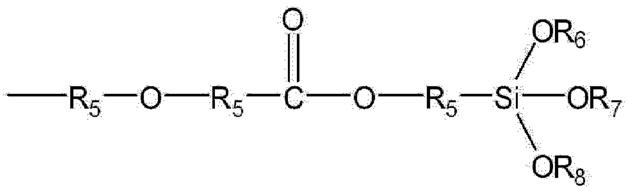

,

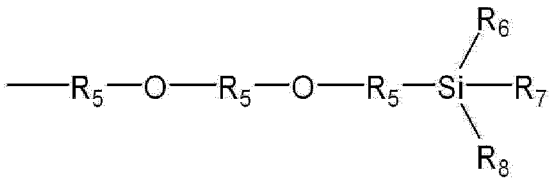

,

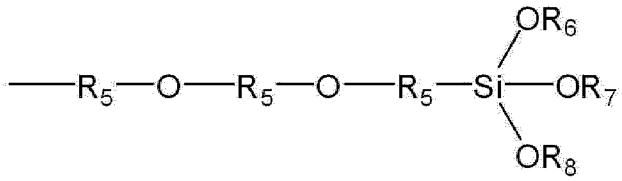

,

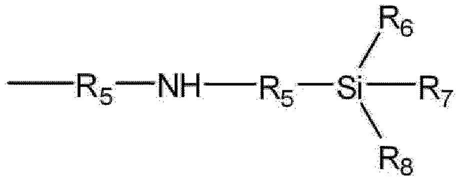

,

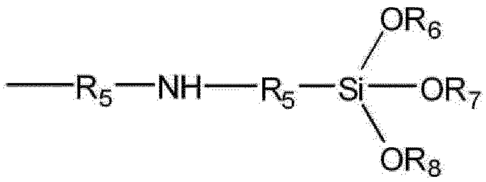

,

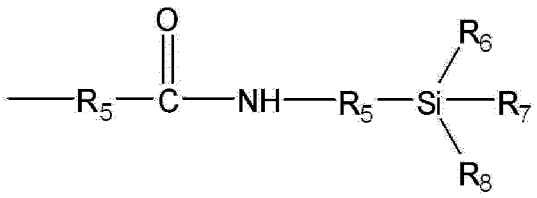

,

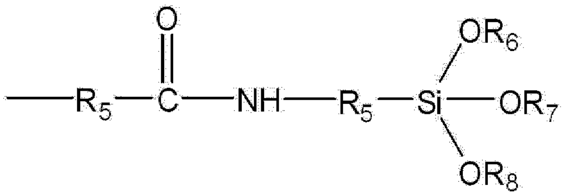

,

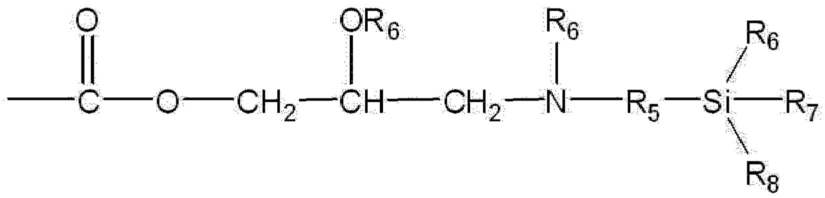

,

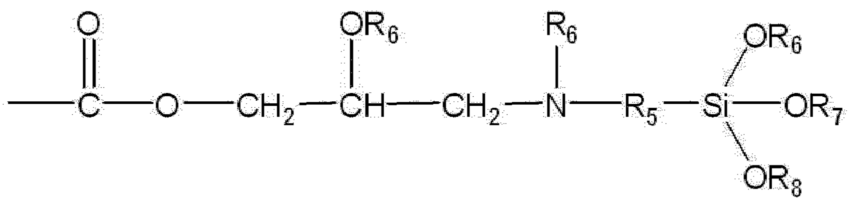

,

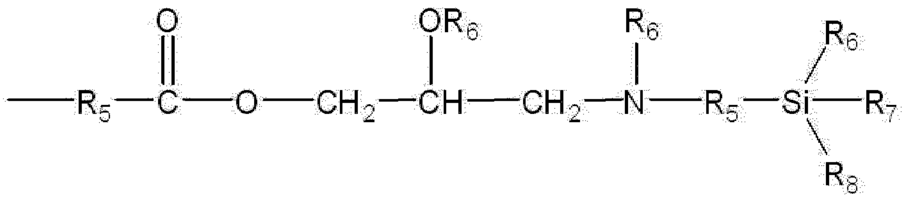

,

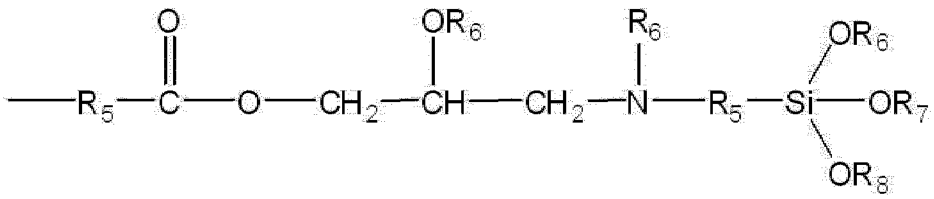

,

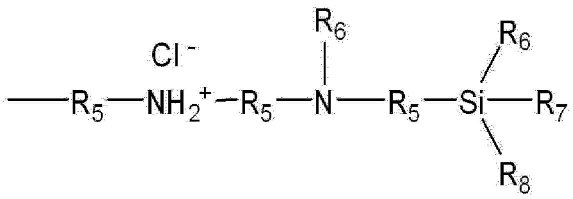

,

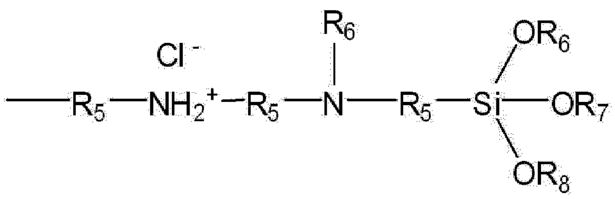

,

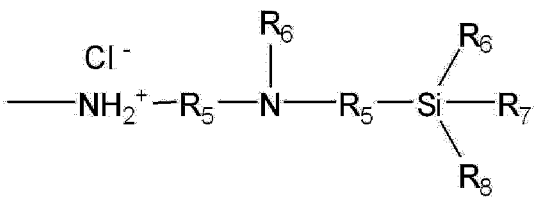

,

and

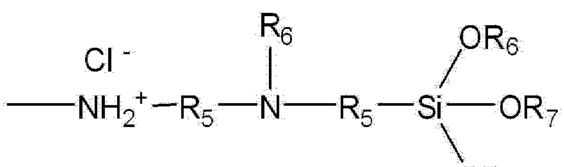

.

In the polar functional group, p is each independently an integer from 1 to 10, R5 is selected from the group consisting of substituted or unsubstituted C1-C20 linear or branched alkylene; substituted or unsubstituted C2-C20 linear or branched alkenylene; substituted or unsubstituted C2-C20 linear or branched alkynylene; substituted or unsubstituted C3-C12 cycloalkylene; substituted or unsubstituted C6-C40 arylene; substituted or unsubstituted C7-C15 aralkylene; substituted or unsubstituted C1-C20 alkoxylene; and substituted or unsubstituted C1-C20 carbonyloxylene, and R6, R7, and R8 are each independently selected from the group consisting of hydrogen; halogen; substituted or unsubstituted C1-C20 linear or branched alkyl; C2-C20 linear or branched alkenyl; substituted or unsubstituted C2-C20 linear or branched alkynyl; substituted or unsubstituted C3-C12 cycloalkyl; substituted or unsubstituted C6-C40 aryl; substituted

or unsubstituted C7-C15 aralkyl; substituted or unsubstituted C1-C20 alkoxy; and substituted or unsubstituted C1-C20 carbonyloxy.

Meanwhile, in a structure of the above-described cyclic olefin compound, each substituent may be specifically defined as follows.

First, "alkyl" used herein refers to a linear or branched, saturated monovalent hydrocarbon moiety having 1-20, preferably 1-10 carbon atoms. The alkyl group may also include groups further substituted by predetermined substituents to be described as well as unsubstituted groups. Examples of the alkyl group used herein may include methyl, ethyl, propyl, 2-propyl, n-butyl, isobutyl, tert-butyl, pentyl, hexyl, dodecyl, fluoromethyl, difluoromethyl, trifluoromethyl, chloromethyl, dichloromethyl, trichloromethyl, iodomethyl, bromomethyl, and the like.

"Alkenyl" used herein refers to a linear or branched monovalent hydrocarbon moiety having 2-20, preferably 2-10 carbon atoms including at least one carbon-carbon double bond. The alkenyl group may be bonded by a carbon atom including a carbon-carbon double bond or a saturated carbon atom. The alkenyl group may also include groups further substituted by predetermined substituents to be described as well as unsubstituted groups. Examples of the alkenyl group may include ethenyl, 1-propenyl, 2-propenyl, 2-butenyl, 3-butenyl, pentenyl, 5-hexenyl, dodecenyl, and the like.

"Cycloalkyl" used herein refers to a saturated or unsaturated non-aromatic monovalent monocyclic, bicyclic, or tricyclic hydrocarbon moiety having 3-20 hydrocarbon rings, and may also include groups further substituted by predetermined substituents to be described. Examples of the cycloalkyl may include cyclopropyl, cyclobutyl, cyclopentyl, cyclopentenyl, cyclohexyl, cyclohexenyl, cycloheptyl, cyclooctyl, decahydronaphthalenyl, adamantanyl, norbornyl (that is, bicyclo [2,2,1] hept-5-enyl), and the like.

"Aryl" used herein refers to a monovalent monocyclic, bicyclic, or tricyclic aromatic hydrocarbon moiety having 6-40, preferably, 6-12 ring atoms, and may also include groups further substituted by predetermined substituents to be described. Examples of the aryl group may include phenyl, naphthalenyl, fluorenyl, and the like.

"Alkoxyaryl" means that at least one hydrogen atom of the above-defined aryl group is substituted with an alkoxy group. Examples of the alkoxyaryl may include methoxyphenyl, ethoxyphenyl, propoxyphenyl, butoxyphenyl, pentoxyphenyl, heptoxyphenyl, heptoxy, octoxy, nanoxy, methoxy biphenyl, methoxynaphthalenyl, methoxyfluorenyl, methoxyanthracenyl, and the like.

"Aralkyl" means that at least one hydrogen atom of the above-defined alkyl group is substituted with an aryl group, and may also include groups further substituted by predetermined substituents to be described. Examples of the aralkyl may include benzyl, benzhydryl, trityl, and the like.

"Alkynyl" refers to a linear or branched, monovalent hydrocarbon moiety having 2-20, preferably 2-10, and more preferably 2-6 carbon atoms, including at least one carbon-carbon triple bond. The alkynyl group may be bonded by a carbon atom including a carbon-carbon triple bond or a saturated carbon atom. The alkynyl group may also include groups further substituted by predetermined substituents to be described. Examples of the alkynyl group may include ethinyl, propynyl, and the like.

"Alkylene" refers to a linear or branched, saturated divalent hydrocarbon moiety having 1-20, preferably 1-10, and more preferably 1-6 carbon atoms. The alkylene group may be optionally substituted by at least one halogen substituent. Examples of the alkylene group may include methylene, ethylene, propylene, butylene, hexylene, and the like.

"Alkenylene" refers to a linear or branched, divalent hydrocarbon moiety having 2-20, preferably 2-10, and more preferably 2-6 carbon atoms, including at least one carbon-carbon double bond. The alkenylene group may be bonded by a carbon atom including a carbon-carbon double bond and/or a saturated carbon atom. The alkenylene group may also include groups further substituted by predetermined substituents to be described.

"Cycloalkylene" used herein refers to a saturated or unsaturated non-aromatic divalent monocyclic, bicyclic, or tricyclic hydrocarbon moiety having 3-12 ring carbons, and may also include groups further substituted by predetermined substituents to be described. Examples of the cycloalkylene may include cyclopropylene, cyclobutylene, and the like.

"Arylene" used herein refers to a divalent monocyclic, bicyclic, or tricyclic aromatic hydrocarbon moiety having 6-20, preferably, 6-12 ring atoms, and may also include groups further substituted by predetermined substituents to be described. The aromatic part includes only carbon atoms. Examples of the arylene group include phenylene, and the like.

"Aralkylene" means a divalent moiety in which at least one hydrogen atom of the above-defined alkylene group is substituted with an aryl group, and may also include groups further substituted by predetermined substituents to be described. Examples of the aralkylene may include benzylene, and the like.

"Alkynylene" refers to a linear or branched, divalent hydrocarbon moiety having 2-20, preferably 2-10, and more preferably 2-6 carbon atoms, including at least one carbon-carbon triple bond. The alkynylene group may be bonded by a carbon atom including a carbon-carbon triple bond or a saturated carbon atom. The alkynylene group may also include groups further substituted by predetermined substituents to be described. Examples of the alkynylene group may include ethinylene, propynylene, and the like.

"Alkylidene group" may be represented by $=CR^1R^2$, and may be linked with a norbornene ring by a double bond. Herein, $R^1$ and $R^2$ may be each independently a hydrocarbon group, specifically, may be a non-polar functional

group or a polar functional group as described above.

The description: the above-described substituents are "substituted or unsubstituted" may include groups further substituted by predetermined substituents as well as each substituent itself. In the specification, unless explicitly described otherwise, examples of the substituent to be further substitutable in each substituent may include halogen, alkyl, alkenyl, alkynyl, haloalkyl, haloalkenyl, haloalkynyl, aryl, haloaryl, aralkyl, haloaralkyl, alkoxy, haloalkoxy, carbonyloxy, halocarbonyloxy, aryloxy, haloaryloxy, silyl, siloxy or polar functional groups including oxygen, nitrogen, phosphorus, sulfur, silicon or boron as described above, or the like.

The polymer having the cyclic olefin-based repeating unit may include a cyclic olefin-based repeating unit only; however, may be a copolymer additionally including other kinds of repeating units, in addition to the cyclic olefin-based repeating unit. Examples of the different kinds of repeating units may include any olefin-based repeating unit, any acrylate-based repeating unit, any cyclic olefin-based repeating unit, and the like.

In addition, in the base film according to an exemplary embodiment of the present invention, the norbornene-based monomer represented by Chemical Formula 2 may include at least one kind of monomer selected from the group consisting of a monomer including a carboxylic acid alkyl ester functional group; a monomer including a polar functional group; a monomer including an acetate group; a monomer including an alkyl group; and a monomer including an aryl group.

More specifically, examples of the monomer including the carboxylic acid alkyl ester functional group may include 5-norbornene-2-carboxylic acid methyl ester, 5-norbornene-2-carboxylic acid ethyl ester, 5-norbornene-2-carboxylic acid butyl ester, 5-norbornene-2-carboxylic acid isobornyl ester, and the like, and examples of the monomer including the polar functional group may include 5-norbornene-2-carboxylic acid hydroxyethyl ester, and the like, and examples of the monomer including the acetate group may include 5-norbornene-2-methyl acetate, and the like. In addition, examples of the monomer including the alkyl group may include 5-butyl-2-norbornene, and the like, and examples of the monomer including the aryl group may include 5-phenyl-2-norbomene, and the like.

The polymer having the cyclic olefin-based repeating unit may have a weight average molecular weight of about 10,000 to 1,000,000, preferably, about 200,000 to 500,000. In addition, the repeating unit represented by Chemical Formula 1 forming the polymer having the cyclic olefin-based repeating unit may have the degree of polymerization of about 30 to 5,000, preferably, about 300 to 1,500.

Further, the base film including the polymer having the cyclic olefin-based repeating unit may have a glass transition temperature (Tg) of about 250 °C or more, or about 250 to about 450 °C, or about 250 to 400 °C, or about 320 to about 400 °C. That is, the base film, which is an amorphous polymer having a rigid and three-dimensionally bulky ring structure in a monomer unit of all backbones, is structurally hard, and includes 50 mol% or more of an exo isomer in the cyclic olefin-based repeating unit to show a high glass transition temperature of about 250 °C or more, preferably, about 250 to 450 °C, such that excellent thermal stability may be provided as compared to the existing base films, such as polyethylene terephthalate (PET), polyethylene naphthalate (PEN), polycarbonate (PC), and the like.

In addition, the base film may have 90% or more of light transmittance at about 400 to 800nm wavelength region. The base film according to an exemplary embodiment of the present invention may include the cyclic olefin-based polymer obtained by addition polymerization using a homogeneous catalyst to have the rigid and three-dimensionally bulky ring structure in the monomer unit of all backbones, such that optical attenuation caused by scattering does not occur, and light absorption is small in a visible ray area due to a pi conjugation, whereby high light transmittance may be shown.

In addition, the base film according to the present invention has a low dielectric constant and electrically excellent isotropy, and low phase difference ($R_{th}$) in a thickness direction, and therefore, when being used as a display device, the base film may be applied as an internal base film as well as an external base film.

Further, the base film may have a thickness of 20 to 200$\mu$m, preferably, 20 to 60$\mu$m.

The transparent metal oxide-based conductive film formed on the base film according to an exemplary embodiment of the present invention may be an indium tin oxide (ITO) film, an antimony tin oxide (ATO) film, an indium zinc oxide (IZO) film, an indium film, a tin oxide film, a zinc oxide film, a titanium oxide film, an antimony oxide film, and the like. The transparent metal oxide-based conductive film may be formed by a sputtering method at a high temperature, but is not limited thereto in view of a kind and a manufacturing method.

In addition, the base film may be used as a substrate of an indium tin oxide (ITO) film for a touch panel, or a substrate of a display device.

Meanwhile, the base film may be manufactured by using known components and methods in general methods of manufacturing the film, except for including the polymer having the above-described cyclic olefin-based repeating unit.

For example, the base film may be manufactured by mixing 10 to 30 wt% of a solution in which the polymer having the cyclic olefin-based repeating unit is dissolved into a solvent with a remaining amount of a solvent to prepare a coating solution, casting the coating solution onto a substrate such as a metal, a glass, or the like, polished in a mirrored state using a knife coater or a bar coater, and drying the solvent. Here, a drying temperature of the solvent may be selected depending on kinds of the solvents to be used, and a surface temperature of the substrate such as a metal, a

glass, or the like, polished in a mirrored state is preferably a room temperature or less.

The solvent is not specifically limited, but examples of the solvent may include cyclic saturated hydrocarbons such as cyclohexane, cycloheptane, cyclooctane, and the like, aromatic hydrocarbons such as benzene, toluene, xylene, ethylbenzene, cumene, and the like, halogenated alkanes or halogenated aryls such as chlorobutane, bromohexane, methylene chloride, dichloroethane, chlorobenzene, chloroform, tetrachloride ethyl, and the like, saturated carboxylic acid esters such as ethyl acetate, n-butyl acetate, methyl propionate, and the like, ethers such as dibutyl ether, tetrahydrofuran, and the like, alcohols such as methanol, ethanol and the like, and the solvent may be used alone or in combination therewith. Further, alkanes such as pentane, hexane, octane, nonane, decane, and the like, may be used by additionally mixing with the solvent.

Meanwhile, according to another exemplary embodiment of the present invention, the laminated structure comprising the above-described base film, and the transparent metal oxide-based conductive film formed on the base film may be provided.

As described above, the base film may include the polymer having the cyclic olefin-based repeating unit, and the cyclic olefin-based repeating unit may have 50 mol% or more of an exo isomer to show a high glass transition temperature, a high light transmittance in a visible ray area, and conductivity, such that the laminated structure comprising the base film and the transparent metal oxide-based conductive film may show excellent thermal resistance and transparency, and may be applied to the display device, and the like.

Description as to the base film and the transparent metal oxide-based conductive film formed on the base film may be applied without limitation as described above in the base film according to an exemplary embodiment of the present invention.

In addition, according to another exemplary embodiment of the present invention, a display device comprising the above-described laminated structure may be provided.

As described above, the laminated structure comprising the base film and the transparent metal oxide-based conductive film may include the polymer having specific repeating units, and may have 50 mol% or more of an exo isomer in the repeating units to show excellent thermal resistance and transparency, which is appropriate for being applied to display device.

The configuration of the display device is complied with that of general devices except for comprising the base film including the above-described polymer having the cyclic olefin-based repeating unit, such that more detailed description thereof will be omitted.

[ADVANTAGEOUS EFFECTS]

According to the present invention, a transparent base film showing a high glass transition temperature to have excellent thermal resistance and high light transmittance, a laminated structure comprising the same, and a display device, may be provided.

[DETAILED DESCRIPTION OF THE EMBODIMENTS]

Hereinafter, the present invention will be explained in more detail with reference to the following Examples. However, these examples are only to illustrate the invention, and the scope of the invention is not limited thereto.

<Examples and Comparative Examples: Preparation of Cyclic **Olefin-**based Polymer and Manufacture of Base Film>

[Example 1]

(1) Preparation of Cyclic Olefin-based Polymer

5-norbornene-2-carboxylic acid butyl ester (100g) having 71 mol% of an exo isomer and 5-norbornene-2-carboxylic acid methyl ester (900g) having 71 mol% of an exo isomer were put into a reactor at room temperature, and toluene (3000g) was added thereto. 1-octyne (10.8g) was additionally put thereinto, then an inner portion of the reactor was substituted with nitrogen, and a temperature of the reactor was raised to be 105 °C. Then, palladium acetate trimer (0.288g), and tricyclohexylphosphinium tetrakis (pentafluorophenyl) borate (2.46g) which are catalysts dissolved into dichloromethane were put into the reactor, followed by stirring for 18 hours for reaction. After 18 hours, white polymer precipitate was obtained from the reactant using acetone and ethanol. The precipitate was filtered by a filter to obtain a polymer, and the polymer was dried in a vacuum oven at 60 °C for 24 hours, to prepare a copolymer of 5-norbornene-2-carboxylic acid butyl ester and 5-norbornene-2-carboxylic acid methyl ester.

(2) Manufacture of Base Film

50g of the copolymer obtained from (1) above was dissolved into a methylene chloride (MC) solvent so as to have 15 wt% of a solid content. Then, the solution was clearly filtered using a filter having pores of 0.45$\mu$m to prepare a coating solution.

In addition, coating solution was casted on a glass substrate using a knife coater or a bar coater, respectively, then dried at room temperature for 1 hour, and dried again at 100 °C under a nitrogen atmosphere for 1 hour. After being dried, the product was immersed in water for 30 seconds, and delaminated a film on the glass substrate to obtain a transparent film having a uniform thickness in which a thickness deviation is less than 2%. Thickness, light transmittance at 400 to 800nm, glass transition temperature of the film were shown in the following Table 1.

[Example 2]

A copolymer of 5-norbornene-2-carboxylic acid butyl ester and 5-norbornene-2-carboxylic acid methyl ester was prepared by the same method as Example 1 except for using 5-norbornene-2-carboxylic acid butyl ester (300g) having 71 mol% of an exo isomer and 5-norbornene-2-carboxylic acid methyl ester (700g) having 71 mol% of an exo isomer, and using 1-octyne (10.3g), palladium acetate trimer (0.275g), and tricyclohexylphosphinium tetrakis (pentafluorophenyl) borate (2.36g), and a base film including the copolymer was manufactured.

[Example 3]

A 5-norbornene-2-carboxylic acid butyl ester polymer was prepared by the same method as Example 1 except for only using 5-norbornene-2-carboxylic acid butyl ester (1000g) having 71 mol% of an exo isomer, and a base film including the polymer was manufactured.

[Comparative Example 1]

A copolymer of 5-norbornene-2-carboxylic acid butyl ester and 5-norbornene-2-carboxylic acid methyl ester was prepared by the same method as Example 1 except for changing the content of the isomers into 5-norbornene-2-carboxylic acid butyl ester (100g) having 27 mol% of an exo isomer and 5-norbornene-2-carboxylic acid methyl ester (900g) having 27 mol% of an exo isomer, and a base film including the copolymer was manufactured.

[Comparative Example 2]

A copolymer of 5-norbornene-2-carboxylic acid butyl ester and 5-norbornene-2-carboxylic acid methyl ester was prepared by the same method as Example 2 except for changing the content of the isomers into 5-norbornene-2-carboxylic acid butyl ester (300g) having 27 mol% of an exo isomer and 5-norbornene-2-carboxylic acid methyl ester (700g) having 27 mol% of an exo isomer, and a base film including the copolymer was manufactured.

**<Experimental Example 1: Test for Measuring Physical Properties>**

Physical properties of each of the base films manufactured by Examples 1 to 3 and Comparative Examples 1 and 2 were measured by the following measuring methods and results thereof were shown in the following Table 1.

(1) Measurement of Phase Difference

Phase difference of each of the base films obtained by Examples were measured by Axoscan from Axomatrix Inc., and thickness of the films were also measured.

Here, a phase difference in a plane is indicated as $R_e$, when an angle between an incident light and a film surface is 50°, a phase difference is indicated as $R_\theta$, and a phase difference between a thickness direction of the film and a high-speed axis (y-axis) in the plane is indicated as $R_{th}$.

<Equation 1>

$$R_{th} = \frac{R_{\theta} \times \cos\theta_f}{\sin^2\theta_f}$$

In Equation 1 above, $R_{th}$ is a phase difference in a thickness direction, and $\theta_f$ is an internal angle.

(2) Measurement of Light Transmittance

Light transmittance of each of the base films obtained by Examples and Comparative Examples was measured by a hazemeter.

(3) Measurement of Transparency (Haze)

Transparency (haze) of each of the base films obtained by Examples and Comparative Examples was measured by a hazemeter.

(4) Measurement of Refractive Index

Refractive index of each of the base films obtained by Examples was measured by prism coupler.

(5) Measurement of Glass Transition Temperature

Glass transition temperature of each of the base films obtained by Examples and Comparative Examples was measured by thermal mechanical analyzer (TMA). Here, on-set point of the film depending on temperature was confirmed.

[Table 1]

| Classification | Thickness ($\mu$m) | Light Transmittance (%) | $R_e$ (nm) | Rth (nm) | $R_{th}$ (nm/$\mu$m) | Haze (%) | Refractive Index | Tg(°C) |
|---|---|---|---|---|---|---|---|---|
| Example 1 | 49 | 92 | 0.0 | -294.0 | -6.00 | 0.2 | 1.54 | 337 |
| Example 2 | 55 | 93 | 0.1 | 1.54 | -5.48 | 0.1 | 1.54 | 330 |
| Example 3 | 54 | 93 | 0.0 | -55.6 | -1.03 | 0.1 | 1.54 | 270 |
| Comparative Example 1 | 50 | 38 | - | - | - | 73 | - | 223 |
| Comparative Example 2 | 50 | 44 | - | - | - | 81 | - | 194 |

As shown in Table 1 above, the base films of Examples 1 to 3 including the polymer having the cyclic olefin-based repeating unit in which the exo isomer has a content of 50% or more showed 90% or more of light transmittance; meanwhile, the base films of Comparative Examples including the polymer having the cyclic olefin-based repeating unit in which the exo isomer has a low content had low solubility to the solvent, such that the base films of Comparative Examples were opaque, and showed 50% or less of light transmittance which is remarkably lowered than those of Examples. The phase difference and the refractive index in the films of Comparative Examples were not measurable since the films had extremely low transparency.

In addition, the base films manufactured by Examples had low phase difference value ($R_{th}$) in a thickness direction per unit $\mu$m to be applicable as an internal base film as well as an external base film.

## Claims

1. A base film including a polymer having a cyclic olefin-based repeating unit, wherein the cyclic olefin-based repeating unit has 50 mol% or more of an exo isomer, and
a transparent metal oxide-based conductive film is formed on the base film.

2. The base film of claim 1, wherein the polymer having the cyclic olefin-based repeating unit is a homopolymer prepared by addition-polymerizing a norbornene-based monomer represented by the following Chemical Formula 2 alone, or a copolymer prepared by addition-copolymerizing two kinds or more thereof:

[Chemical Formula 2]

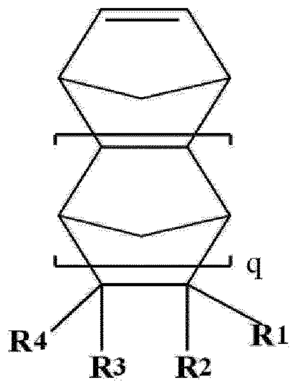

in Chemical Formula 2,
q is an integer of 0 to 4,
R1 to R4 are each independently a polar functional group or a non-polar functional group, or
at least one combination selected from the group consisting of R1 and R2, and R3 and R4 is linked to each other to form a C1-C10 alkylidene group, or R1 or R2 is linked to either of R3 and R4 to form a C4-C12 saturated or unsaturated aliphatic ring, or a C6-C24 aromatic ring.

3. The base film of claim 1, wherein the cyclic olefin-based repeating unit has 50 to 100 mol% of the exo isomer.

4. The base film of claim 2, wherein the non-polar functional group is selected from the group consisting of hydrogen; halogen; substituted or unsubstituted C1-C20 linear or branched alkyl; substituted or unsubstituted C2-C20 linear or branched alkenyl; substituted or unsubstituted C2-C20 linear or branched alkynyl; substituted or unsubstituted C3-C12 cycloalkyl; C6-C40 aryl; and substituted or unsubstituted C7-C15 aralkyl.

5. The base film of claim 2, wherein the polar functional group is selected from the group consisting of $-R_5OR_6$, $-OR_6$, $-OC(O)OR_6$, $-R_5OC(O)OR_6$, $-C(O)OR_6$,$-R_5C(O)OR_6$, $-C(O)R_6$, $-R_5C(O)R_6$, $-OC(O)R_6$, $-R_5OC(O)R_6$, $-(R_5O)_p-OR_6$, $-(OR_5)_p-OR_6$, $-C(O)-O-C(O)R_6$, $-R_5C(O)-O-C(O)R_6$, $-SR_6$, $-R_5SR_6$, $-SSR_6$, $-R_5SSR_6$, $-S(=O)R_6$,$-R_5S(=O)R_6$, $-R_5C(=S)R_6$-, $-R_5C(=S)SR_6$, $-R_5SO_3R_6$, $-SO_3R_6$, $-R_5N=C=S$, $-N=C=S$, - NCO, $-R_5-NCO$, -CN, $-R_5CN$, $-NNC(=S)R_6$, $-R_5NNC(=S)R_6$, $-NO_2$, $-R_5NO_2$,

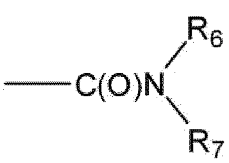 , 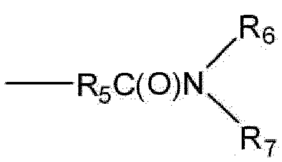 , 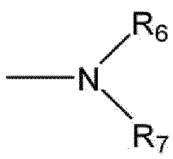 , 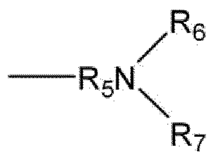 ,

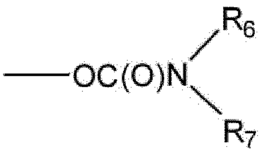, 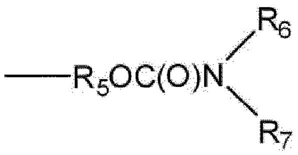, 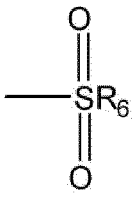, 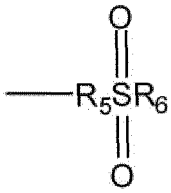, 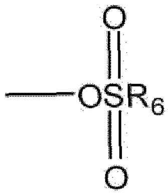,

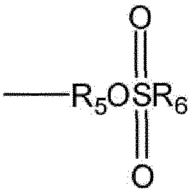, 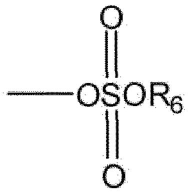, 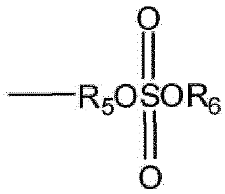, 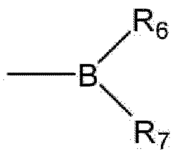, 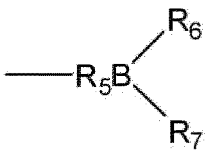,

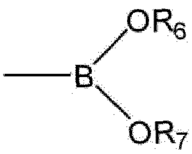, 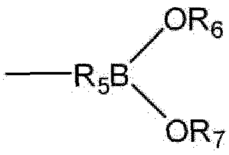, 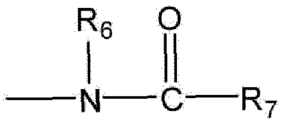, 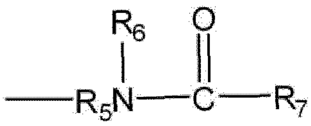,

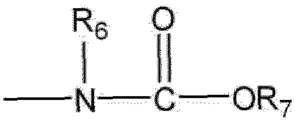, 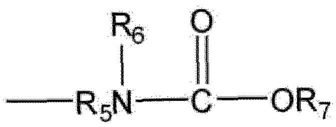, 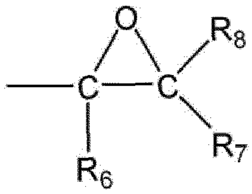,

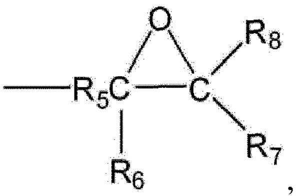, 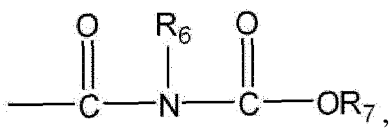, 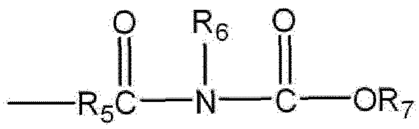,

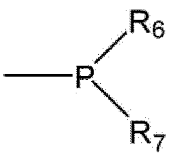, 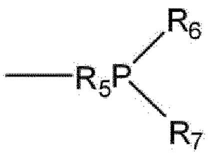, 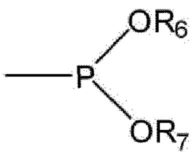, 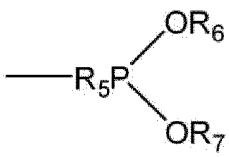, 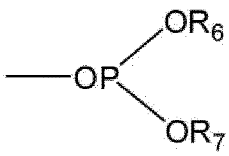,

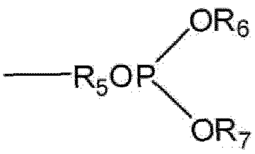, 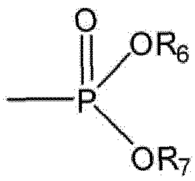, 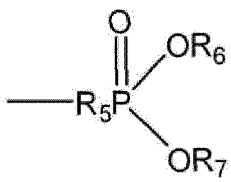, 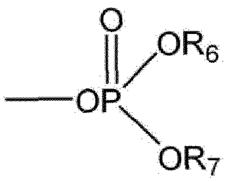,

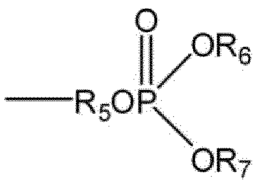 , 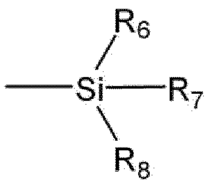 , 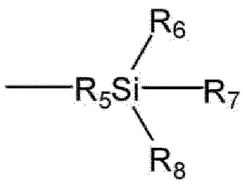 , 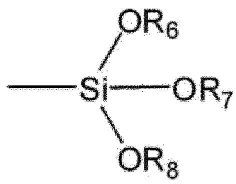 ,

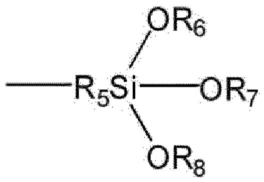 , 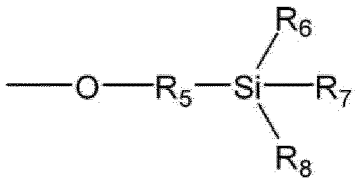 , 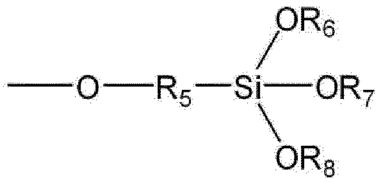 ,

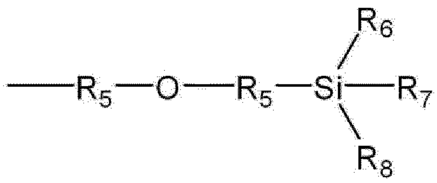 , 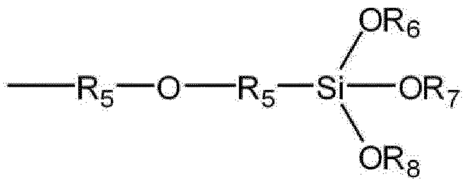 ,

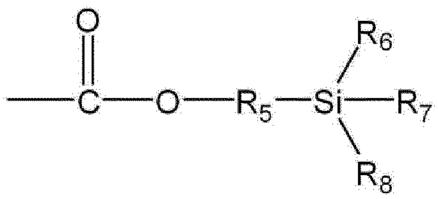 , 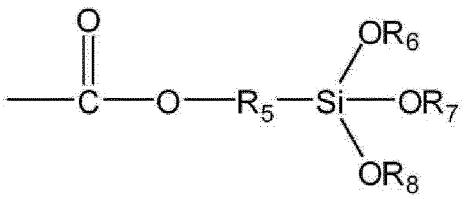 ,

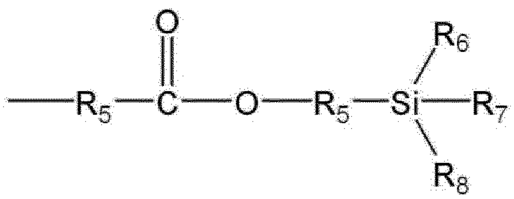 , 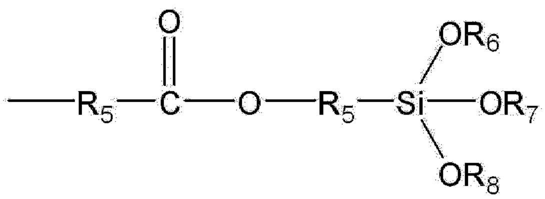 ,

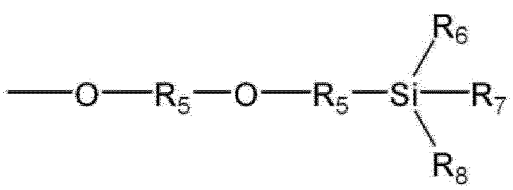 , 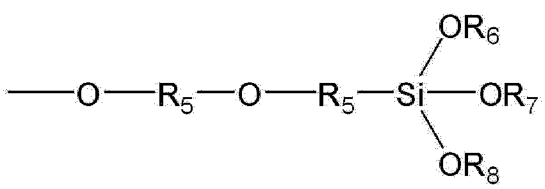 ,

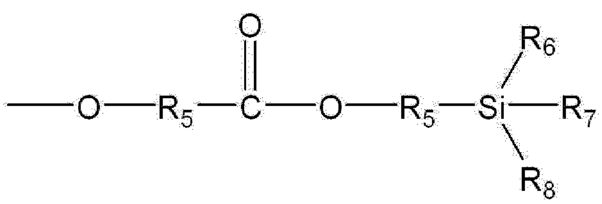 ,

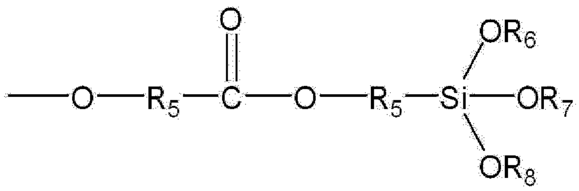

,

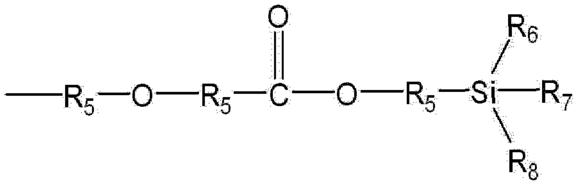

,

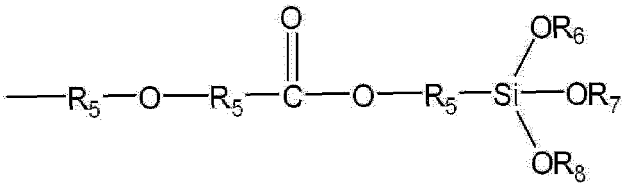

,

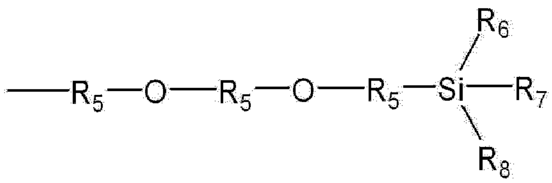

,

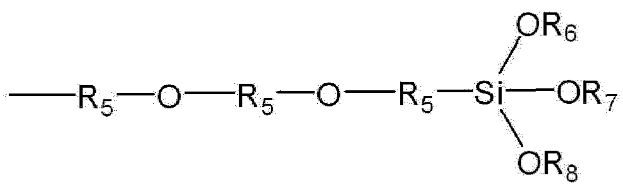 , 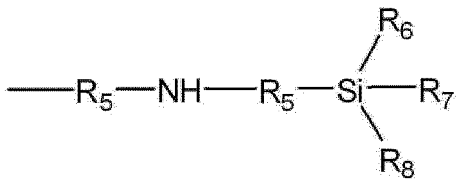 ,

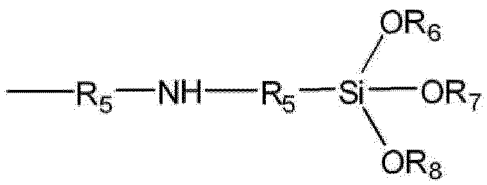 , 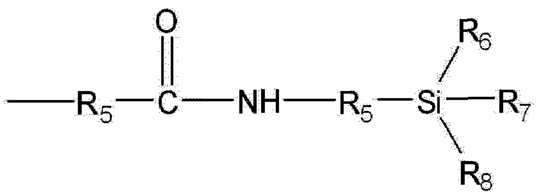 ,

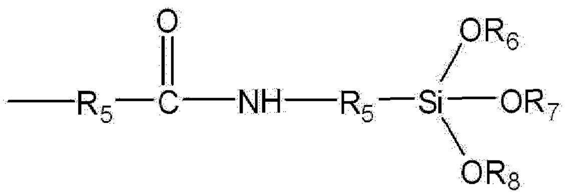

,

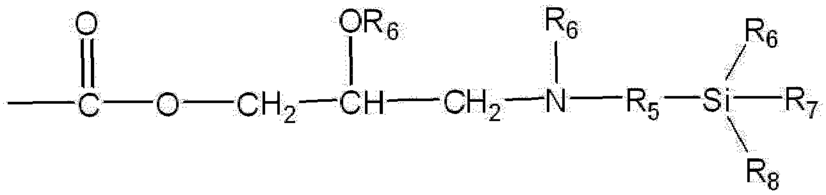

,

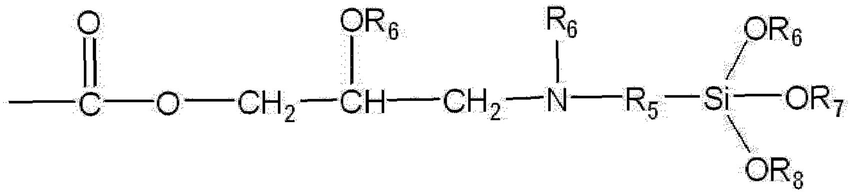

,

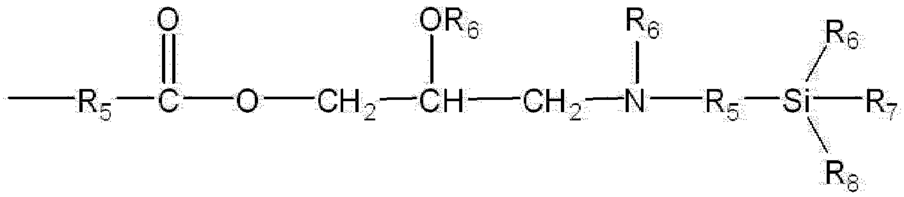

,

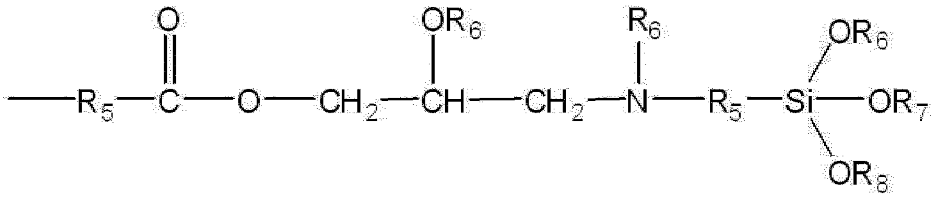

,

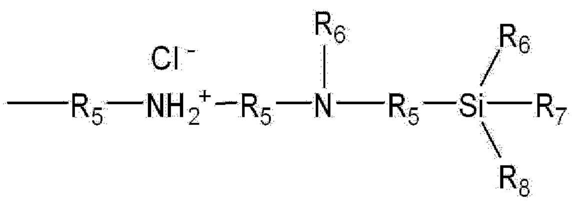

,

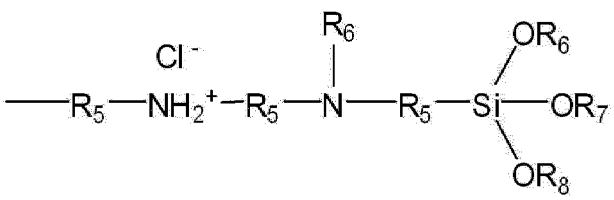

,

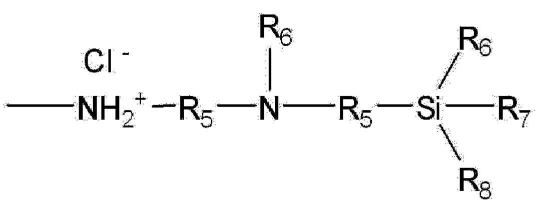

,

and

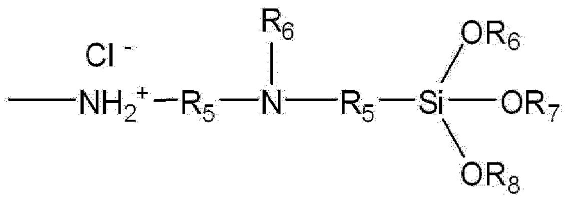
,

in the polar functional group,
p is each independently an integer from 1 to 10,
R5 is selected from the group consisting of substituted or unsubstituted C1-C20 linear or branched alkylene; substituted or unsubstituted C2-C20 linear or branched alkenylene; substituted or unsubstituted C2-C20 linear or branched alkynylene; substituted or unsubstituted C3-C12 cycloalkylene; substituted or unsubstituted C6-C40 arylene; substituted or unsubstituted C7-C15 aralkylene; substituted or unsubstituted C1-C20 alkoxylene; and substituted or unsubstituted C1-C20 carbonyloxylene, and
R6, R7, and R8 are each independently selected from the group consisting of hydrogen; halogen; substituted or unsubstituted C1-C20 linear or branched alkyl; C2-C20 linear or branched alkenyl; substituted or unsubstituted C2-C20 linear or branched alkynyl; substituted or unsubstituted C3-C12 cycloalkyl; substituted or unsubstituted C6-C40 aryl; substituted or unsubstituted C7-C15 aralkyl; substituted or unsubstituted C1-C20 alkoxy; and substituted or unsubstituted C1-C20 carbonyloxy.

**6.** The base film of claim 1, wherein the polymer having the cyclic olefin-based repeating unit has a weight average molecular weight of 10,000 to 1,000,000.

**7.** The base film of claim 2, wherein the norbornene-based monomer represented by Chemical Formula 2 includes one kind of monomer selected from the group consisting of a monomer including a carboxylic acid alkyl ester functional group; a monomer including a polar functional group; a monomer including an acetate group; a monomer including an alkyl group; and a monomer including an aryl group.

**8.** The base film of claim 1, wherein a glass transition temperature is 250 °C or more.

**9.** The base film of claim 1, wherein a light transmittance at 400 to 800nm is 90% or more.

**10.** The base film of claim 1, wherein a thickness is 20 to 200$\mu$m.

**11.** The base film of claim 1, wherein the transparent metal oxide-based conductive film is one or more kinds selected from the group consisting of an indium tin oxide (ITO) film, an antimony tin oxide (ATO) film, an indium zinc oxide (IZO) film, a tin oxide film, a zinc oxide film, a titanium oxide film, and an antimony oxide film.

**12.** The base film of claim 1, wherein it is used as a substrate of an indium tin oxide (ITO) film for a touch panel, or a substrate of a display device.

**13.** A laminated structure comprising:

the base film of claim 1; and
a transparent metal oxide-based conductive film formed on the base film.

**14.** A display device comprising the laminated structure of claim 13.

# INTERNATIONAL SEARCH REPORT

International application No.
**PCT/KR2014/009120**

A. CLASSIFICATION OF SUBJECT MATTER

***G06F 3/041(2006.01)i***

According to International Patent Classification (IPC) or to both national classification and IPC

B. FIELDS SEARCHED

Minimum documentation searched (classification system followed by classification symbols)

G06F 3/041; C07F 5/02; C08F 4/60; C08F 12/20; B23B 27/16; B32B 27/30; C09J 125/06; C09J 7/02; B23B 3/30; C07F 9/54

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: display, base film, polymer, exo

C. DOCUMENTS CONSIDERED TO BE RELEVANT

| Category* | Citation of document, with indication, where appropriate, of the relevant passages | Relevant to claim No. |
|---|---|---|
| Y | JP 2013-054517 A (NITTO DENKO CORP) 21 March 2013<br>See paragraphs [0001], [0011], [0030], [0036], [0038]; and figures 1-4. | 1-14 |
| Y | KR 10-2006-0049922 A (LG CHEM, LTD.) 19 May 2006<br>See page 7, lines 3-9; page 9, lines 28-31, 55-57; page 10, lines 13-15; page 18, line 22; table 8; and figure 1. | 1-14 |
| Y | WO 2011-021805 A2 (LG CHEM, LTD.) 24 February 2011<br>See paragraphs [0061]-[0067], [0096]; claim 9; chemical formula 5; and figure 1. | 2,4-5,7 |
| A | | 1,3,6,8-14 |
| A | KR 10-2010-0030606 A (DAICEL CHEMICAL INDUSTRIES, LTD.) 18 March 2010<br>See paragraphs [0031]-[0033]; and figure 1. | 1-14 |
| A | KR 10-2008-0013998 A (SEKISUI CHEMICAL CO., LTD.) 13 February 2008<br>See paragraphs [0019]-[0021]; and figure 1. | 1-14 |

☐ Further documents are listed in the continuation of Box C.   ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26 JANUARY 2015 (26.01.2015) | **27 JANUARY 2015 (27.01.2015)** |

| Name and mailing address of the ISA/**KR** | Authorized officer |
|---|---|
| Korean Intellectual Property Office<br>Government Complex-Daejeon, 189 Seonsa-ro, Daejeon 302-701, Republic of Korea<br>Facsimile No. 82-42-472-7140 | Telephone No. |

Form PCT/ISA/210 (second sheet) (July 2009)

INTERNATIONAL SEARCH REPORT
Information on patent family members

International application No.
PCT/KR2014/009120

| Patent document cited in search report | Publication date | Patent family member | Publication date |
|---|---|---|---|
| JP 2013-054517 A | 21/03/2013 | NONE | |
| KR 10-2006-0049922 A | 19/05/2006 | CN 101023107 A | 22/08/2007 |
| | | CN 101023107 B | 12/05/2010 |
| | | CN 101023107 C0 | 22/08/2007 |
| | | CN 1910210 A | 07/02/2007 |
| | | CN 1910210 B | 08/12/2010 |
| | | EP 1765887 A1 | 28/03/2007 |
| | | EP 1765887 B1 | 26/02/2014 |
| | | EP 1794197 A1 | 13/06/2007 |
| | | JP 2007-517958 A | 05/07/2007 |
| | | JP 2008-513568 A | 01/05/2008 |
| | | JP 4837666 B2 | 14/12/2011 |
| | | JP 5449649 B2 | 19/03/2014 |
| | | KR 10-0733923 B1 | 02/07/2007 |
| | | KR 10-0762839 B1 | 09/10/2007 |
| | | TW I302539 B | 01/11/2008 |
| | | TW I320791 B | 21/02/2010 |
| | | US 2006-0058477 A1 | 16/03/2006 |
| | | US 2009-0192277 A1 | 30/07/2009 |
| | | US 2010-0174039 A1 | 08/07/2010 |
| | | US 7648937 B2 | 19/01/2010 |
| | | US 7814713 B2 | 19/10/2010 |
| | | WO 2006-004376 A1 | 12/01/2006 |
| | | WO 2006-004376 A9 | 12/01/2006 |
| | | WO 2006-031067 A1 | 23/03/2006 |
| WO 2011-021805 A2 | 24/02/2011 | CN 102317294 A | 11/01/2012 |
| | | EP 2468758 A2 | 27/06/2012 |
| | | JP 2013-502408 A | 24/01/2013 |
| | | KR 10-1225127 B1 | 22/01/2013 |
| | | US 2011-0130532 A1 | 02/06/2011 |
| | | US 8420755 B2 | 16/04/2013 |
| | | WO 2011-021805 A3 | 30/06/2011 |
| KR 10-2010-0030606 A | 18/03/2010 | JP 2010-066469 A | 25/03/2010 |
| | | TW 201017227 A | 01/05/2010 |
| | | US 2010-0062225 A1 | 11/03/2010 |
| KR 10-2008-0013998 A | 13/02/2008 | CN 101189317 A | 28/05/2008 |
| | | EP 1889888 A1 | 20/02/2008 |
| | | EP 1889888 A4 | 07/07/2010 |
| | | JP 2007-016217 A | 25/01/2007 |
| | | JP 2007-126512 A | 24/05/2007 |
| | | JP 5155527 B2 | 06/03/2013 |
| | | US 2009-0117379 A1 | 07/05/2009 |
| | | WO 2006-132183 A1 | 14/12/2006 |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020130116653
- KR 1020140129370